# EUROPÄISCHE PATENTSCHRIFT

(11) **EP 2 026 050 B1**
(45) Veröffentlichungstag und Bekanntmachung des Hinweises auf die Patenterteilung: **21.07.2010**
(21) Anmeldenummer: 08013866.2
(22) Anmeldetag: 01.08.2008
(51) Int. Cl.: G01J 3/02, G01J 3/04, G02B 27/10, G02B 27/14

(54) **Abbildendes Spektrometer mit einer Vorrichtung zur Trennung wenigstens zweier jeweils einen örtlichen Bereich abbildender Lichtbündel**
Imaging spectrometer comprising a device for separating at least two light beams, each representing an area
Spectromètre d'imagérie comprennant un dispositif de séparation d'au moins deux faisceaux lumineux représentant respectivement une zone spatiale

(30) Priorität: 01.08.2007 DE 102007036067
(43) Veröffentlichungstag der Anmeldung: 18.02.2009
(73) Patentinhaber: Erwin Kayser-Threde GmbH, 81379 München (DE)
(72) Erfinder: Schubert, Josef, 85737 Ismaning (DE)
(74) Vertreter: Prüfer & Partner GbR European Patent Attorneys

(56) Entgegenhaltungen:
- EP-A- 0 418 705
- WO-A-94/07117
- DE-A1- 3 932 886
- DE-C- 899 282

## Beschreibung

Die Erfindung betrifft eine Vorrichtung zur Trennung wenigstens zweier jeweils einen örtlichen Bereich abbildender Lichtbündel und ein Spektrometer mit einer solchen Vorrichtung, insbesondere für die Anwendung in der luftfahrzeug- und weltraumgestützten optischen Femerkundung oder in der Informationstechnik zur Signalübertragung oder Signaltrennung.

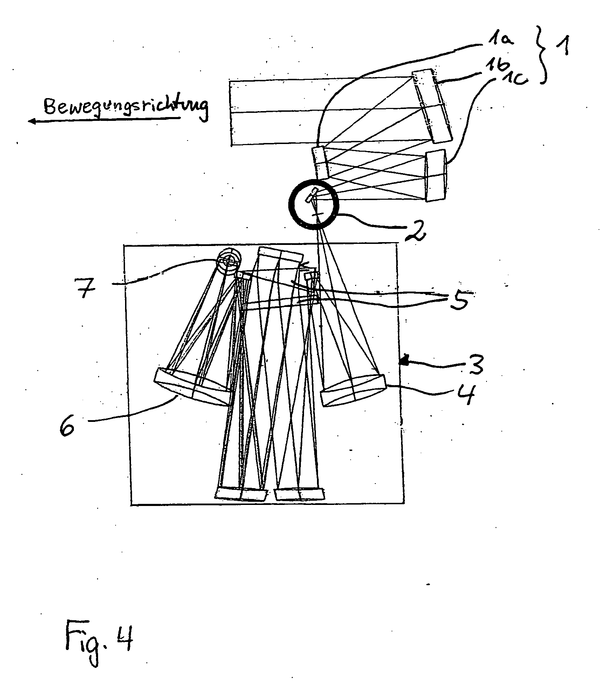

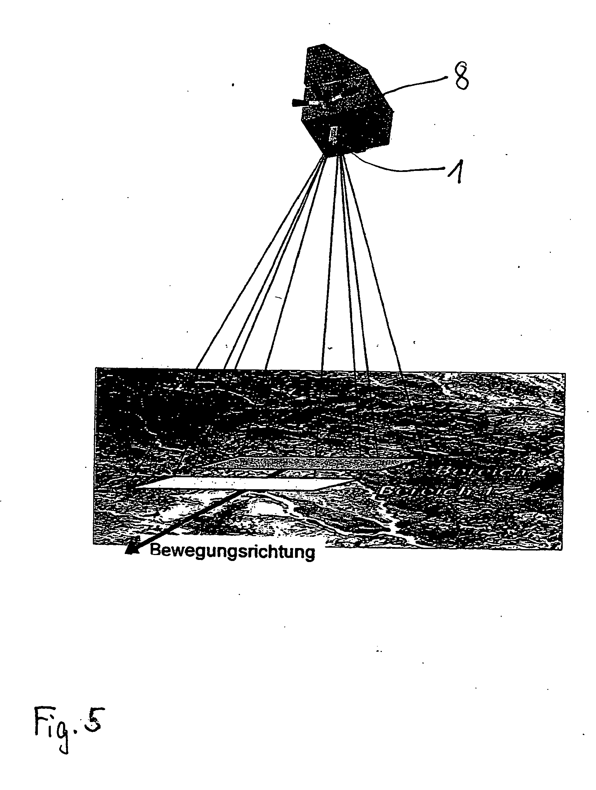

Eine bekannte Anordnung für abbildende Spektrometer in der luftfahrzeug- und weltraumgestützten optischen Femerkundung ist in Fig. 4 dargestellt. Es handelt sich um eine sogenannte Push-Broom-Könfiguration, die ein mehrere Spiegel 1a, 1b, 1c beinhaltendes Frontteleskop 1, eine Spaltanordnung 2 und ein Spektrometer 3 aufweist. Das Spektrometer 3 beinhaltet üblicherweise einen Kollimator 4, eine Prismenanordnung 5, einen Kollimator 6 und einen Detektor 7. Der Detektor 7 ist als Matrixdetektor, z.B. als CCD-Kamera, mit einer Mehrzahl von Zeilen und Spalten ausgebildet. Wie aus Fig. 5 ersichtlich ist, ist das Frontteleskop 1 in einem Satelliten 8 vorgesehen, der sich über den Erdboden in einer vorbestimmten Bewegungsrichtung bewegt. Mit dem Frontteleskop 1 wird ein Bild eines Bereichs des Erdbodens abgebildet und mittels der Spaltanordnung 2 ein schmaler Streifen des Bereichs ausgewählt. Der Streifen hat eine Ausdehnung, die größer in einer Richtung quer zur Bewegungsrichtung des Satelliten 8 ist, als senkrecht zu dieser. Dieser Streifen wird auf einer Zeile des Matrixdetektors 7 abgebildet. Mit Hilfe des dazwischengeschalteten Spektrometers 3 wird zusätzlich das Licht in die zweite Dimension (in Bewegungsrichtung) spektral zerlegt und simultan aufgezeichnet. Durch die Flugbewegung des Satelliten lässt sich somit bei ausreichend schneller Belichtung und Auslesung des Matrixdetektors ein zusammenhängendes, simultan in seine spektralen Anteile zerlegtes Bild vom überflogenen Gebiet erstellen.

Die derzeit erhältlichen Matrixdetektoren haben die Eigenschaft, nicht über den gesamten gewünschten zu erfassenden Wellenlängenbereich empfindlich zu sein. Zur Abdeckung des gesamten Wellenlängenbereichs muss somit mehr als ein Matrixdetektor verwendet werden. Dies hat zur Folge, dass das vom Frontteleskop empfangene Licht in der Regel mittels eines oder mehrerer Strahlteiler in mindestens zwei oder mehrere Spektrometer aufgeteilt werden muss. Damit sind mehrere Nachteile verbunden. Bedingt durch die nicht ideale Strahlteiler-Charakteristik (nicht unendlich steile Kante), geht an der Grenze der Wellenlängenbereiche Energie verloren. Ferner treten störende Polarisationseffekte auf. Die Herstellbarkeit der Vorrichtung ist je nach den geforderten Eigenschaften der Grenzwellenlängen schwierig, insbesondere bei Raumfahrtanwendungen. Ferner hat eine solche Anordnung eine reduzierte Transmission und damit einen Lichtverlust im gesamten interessierenden Wellenlängenbereich.

Als alternatives Prinzip ist die sogenannte Methode der Feldseparation beschrieben worden. Dabei wird in der Fokalebene des Frontteleskops 1 eine Doppelspalteinheit verwendet, so dass aus dem Sichtfeld des Frontteleskops gleichzeitig zwei in Bewegungsrichtung räumlich getrennte schmale Streifen des Erdbodens, wie in Fig. 5 dargestellt ist, mit zwei getrennten Spektrometern, die in verschiedenen Wellenlängenbereichen empfindlich sind, zeitgleich abgebildet werden. Die dadurch entstehenden Bilder sind dabei entsprechend dem Abstand der Spalte leicht in Bewegungsrichtung versetzt. Die Erzeugung des Gesamtbilds erfolgt durch Software, die diesen Versatz berücksichtigt. Der Versatz ist möglichst klein zu halten, da die Ausrichtestabilität des Satelliten nicht beliebig genau bekannt ist und somit ein Zusammensetzen der getrennt aufgezeichneten spektralen Bilder schwierig sein kann.

Vorteile des Prinzips der Feldseparation liegen darin, dass die gesamte Lichtmenge in allen Spektrometern zur Verfügung steht, dass die Polarisationseffekte geringer sind und dass keine Einschränkung der Transmission über den gesamten Spektralbereich besteht. Es ist ferner möglich, Redundanz durch die Überlappung der Spektralbereiche zu erzielen. Ferner können die Transmissions- und Abbildungseigenschaften der in den Spektrometern verwendeten Optiken getrennt optimiert werden.

Ein Nachteil der Feldseparation besteht darin, dass abhängig vom Spaltabstand eine sehr hohe Ausrichtestabilität bzw. Kenntnis der Ausrichtung des Sensors erforderlich ist. Um den Nachteil zu vermeiden, ist es notwendig, die Spalte räumlich sehr nahe aneinander zu setzen, aber zugleich eine Aufteilung des Lichts in die getrennten Spektrometer zu ermöglichen, wobei eine gegenseitige Beeinflussung durch Streulicht, das an der Trennstelle entstehen kann, vermieden werden muss.

Die Offenlegungsschrift DE 39 32 886 offenbart eine Vorrichtung zur gleichzeitigen Erfassung von zwei definierten Wellenlängenbereichen einer Lichtstrahlung, die für jede Wellenlänge jeweils eine modular aufgebaute Blende und jeweils hinter den Blenden angeordnete Spielgel zum Ablenken der durch die Blenden tretenden Lichtstrahlen aufweist.

Es ist Aufgabe der Erfindung, eine Vorrichtung zur Trennung wenigstens zweier einen örtlichen Bereich abbildender Lichtbündel und ein diese Vorrichtung beinhaltendes Spektrometer bereitzustellen, welches eine Minimierung des Spaltabstandes erlaubt und die im Hinblick auf die Anwendung in der Raumfahrt eine thermo-mechanisch robuste und zeitlich stabile Anordnung darstellt.

Die Aufgabe wird gelöst durch eine Spektrometer nach Patentanspruch 1 und eine Verwendung des Spektrometers nach Patentanspruch 12. Weiterbildungen der Erfindung sind in den Unteransprüchen angegeben.

Die Aufgabe erfordert einen miniaturisierten optischen Aufbau, da ansonsten die Trennung bei gleichzeitig miniaturisiertem Spaltabstand nicht möglich ist.

Die Vorrichtung weist den Vorteil auf, dass als Basismaterial ein Si-Wafer verwendet werden kann, welcher präzise zu bearbeiten ist und außerdem kostengünstig ist. Der modulare Aufbau der Einzelteile der Doppelspalt/Feldseparationseinheit erlaubt die Nutzung bekannter und damit kostenoptimaler Ätz- und Polierverfahren zur Erzielung der geforderten optischen Abbildungsqualität. Die Feldseparationseinheit ist leicht fertigbar trotz kleinster mechanischer Abstände, wobei erprobte Fotolithografietechniken verwendet werden können. Es besteht maximale Streulichtunterdrückung. Die optischen Oberflächen können bzw. müssen mit bekannten Beschichtungsverfahren mit hochreflektiven Oberflächen versehen werden.

Die gesamte Doppelspalt/Feldseparationseinheit ist aus dem gleichen Material gebildet. Damit ist eine hohe thermomechanische Stabilität erreichbar, die bei einem möglichen Einsatz in der Raumfahrt oder unter vergleichbar rauhen Umgebungsbedingungen, wobei die Vorrichtung unter Temperaturen von typischerweise -40°C bis +80°C eingesetzt wird, gefordert wird. Die Si-Waferverbindungstechnik erlaubt eine zuverlässige, spannungsfreie und hochgenaue Justage und Verbindung der Einzelelemente.

Die Spaltbreiten liegen in der Größenordnung von ca. 10 µm bis 60 µm. Die Länge der Spalte liegt im Bereich von einigen Zentimetern und kann daher die Spaltbreite bzw. den Abstand der Spalte um mehr als das Tausendfache übersteigen. Durch die Herstellung mittels der Halbleiter-Wafertechnik ist es möglich, derartige miniaturisierte Präzisionsoptiken zu erhalten.

Weitere Merkmale und Zweckmäßigkeiten der Erfindung ergeben sich aus der Beschreibung von Ausführungsbeispielen anhand der Figuren.

Von den Figuren zeigen:
- Fig. 1: eine schematische Darstellung des Prinzips der Feldseparation mit einer schematischen Darstellung der Vorrichtung zur Trennung zweier jeweils einen örtlichen Bereich abbildender Lichtbündel;
- Fig. 2a: eine schematische Schnittansicht der Vorrichtung zur Trennung zweier Lichtbündel nach einer ersten Ausführungsform;
- Fig. 2b: einen vergrößerten Ausschnitt aus Fig. 2a;
- Fig. 3a: einen schematischen Querschnitt der Vorrichtung zur Trennung zweier Lichtbündel nach einer zweiten Ausführungsform;
- Fig. 3b: einen vergrößerten Ausschnitt aus Fig. 3a;
- Fig. 4: eine schematische Ansicht einer bekannten Teleskop-Spektrometeranordnung für "Push-Broom"-Sensoren ohne Feldtrennung; und
- Fig. 5: eine schematische Darstellung des Abbildungsprinzips bei Push-Broom-Sensoren bei Erdbeobachtungs-Satelliten mit Feldtrennung.

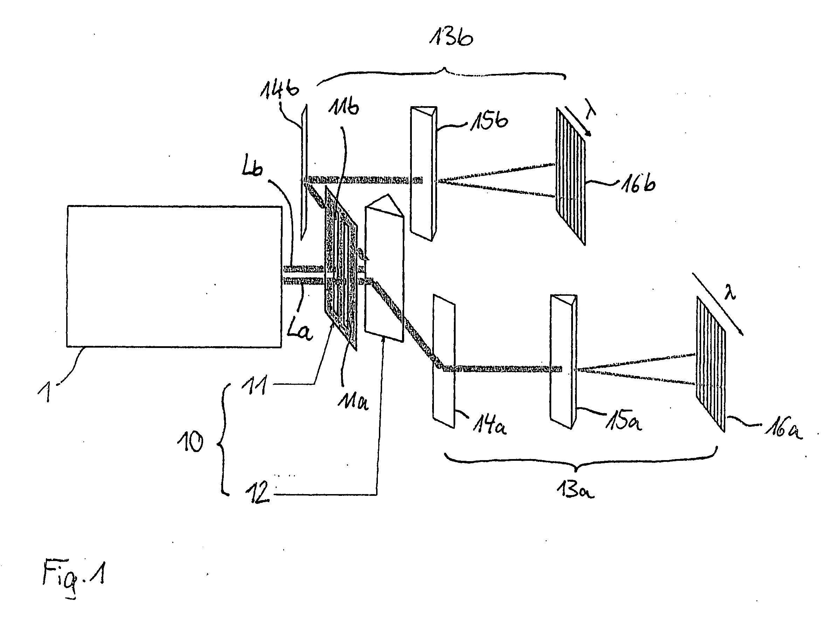

Wie aus Fig. 1 ersichtlich ist, beinhaltet die erfindungsgemäße Vorrichtung zur Femerkundung ein Frontteleskop 1 und eine Vorrichtung 10 zum Trennen zweier Lichtbündel, die eine Doppelspalteinheit 11 und eine Ablenkeinheit 12 aufweist, sowie zwei Spektrometer 13a, 13b, die jeweils wenigstens eine Optik 14a, 14b mit Kollimatoren und Spiegel, eine Disperseranordnung 15a, 15b und Matrixdetektoren 16a, 16b umfasst. Die Detektoren 16a, 16b sind in verschiedenen Wellenlängenbereichen empfindlich. Beispielsweise kann der Detektor 16a Wellenlängen von 400 bis 900 nm und der Detektor 16b Wellenlängen von 900 bis 2.500 nm erfassen. Eine beliebige andere Aufteilung oder ein teilweiser Überlapp der Wellenlängenbereiche ist möglich.

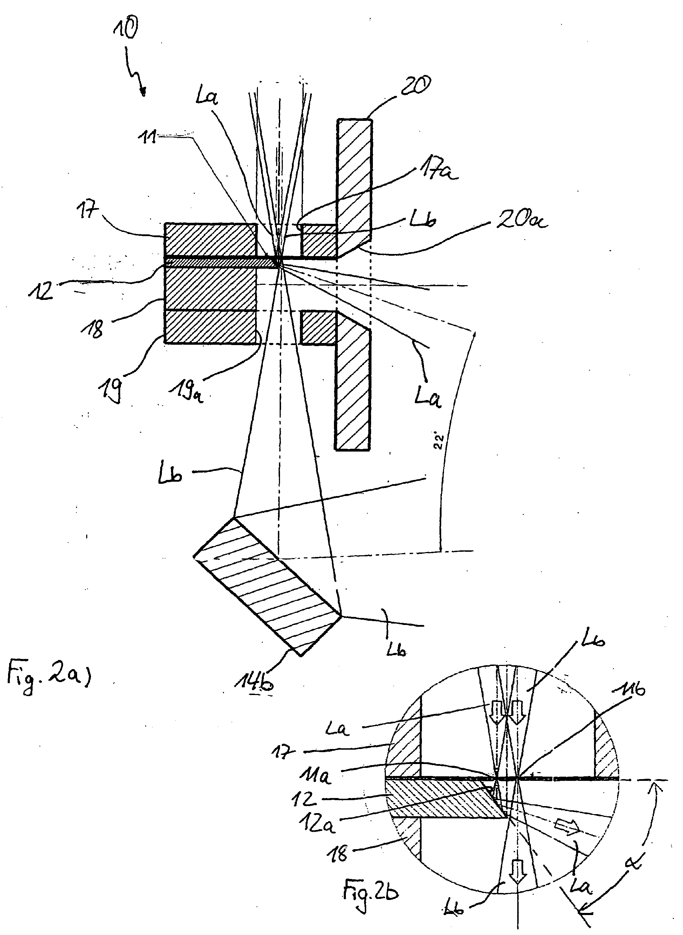

Eine erste Ausführungsform der Vorrichtung 10 zur Trennung der Lichtbündel ist in Fig. 2a und Fig. 2b dargestellt. Die Vorrichtung ist schichtweise aufgebaut. Als Basismaterial werden vorzugsweise Silizium-Wafer (nachfolgend Si-Wafer) bzw. Wafermaterial verwendet. Die Doppelspalteinheit 11 ist als sehr dünn geätzter Wafer ausgebildet, beispielsweise mit einer Dicke von weniger als 0.3 mm mit zusätzlicher Ausdünnung auf weniger als 5µm. In dem Wafer sind zwei rechteckige Spalte 11a, 11b vorgesehen, die eine Länge im Bereich von etwa 25 mm und eine Breite im Bereicht von etwa 24 µm aufweisen. Der Abstand zwischen den Spalten beträgt weniger als 480 µm bei einer Spaltbreite von 24 µm. Der Umriss des Waferplättchens, welches die Doppelspalteinheit 11 bildet, ist rechteckig, es kann jedoch auch jede andere Umrissgeometrie gewählt werden, die spezifisch an die Einbaubedingungen angepasst werden kann.

Auf der dem Frontteleskop abgewandten Seite der Doppelspalteinheit 11 ist eine Ablenkeinheit 12 vorgesehen, die ebenfalls als Schicht ausgebildet ist. Auch die Ablenkeinheit 12 kann als dünn geätzter Si-Wafer ausgebildet sein. Sie hat beispielsweise eine Dicke von weniger als 1 mm, etwa 0.9 mm. Die Ablenkeinheit 12 weist eine als Spiegel wirkende schräge Fläche 12a auf, die sich in ihrer Längsausdehnung wenigstens über die Länge der Spalte 11 a, 11 b erstreckt, und die im Bereich der Spalte 11a, 11b den Rand des Wafers bildet. Die schräge Fläche 12a schließt mit der Ebene, in der die Spalte 11a, 11b angeordnet sind, einen spitzen Winkel α ein. Der Winkel wird entsprechend den geometrischen Gegebenheiten gewählt. Die Fläche ist so hinter den Spalten angeordnet, dass, wie aus Fig. 2b ersichtlich ist, ein durch den Spalt 11a hindurchtretendes Lichtbündel La auf die schräge Fläche 12a auftritt und an dieser unter dem Winkel α gemessem zum Lot auf die Fläche 12a reflektiert wird. Die Länge der schrägen Fläche 12a in Richtung des zweiten Spalts 11b hin ist so bemessen, dass ein durch den zweiten Spalt 11b hindurchtretendes Lichtbündel Lb gerade nicht mehr auf die schräge Fläche 12a auftrifft, sondern ungehindert durch den Spalt 11b hindurch und an der Fläche 12a der Ablenkeinheit vorbeigeht.

Wie aus Fig. 2a ersichtlich ist, ist auf der dem Frontteleskop zugewandten Seite der Doppelspalteinheit 11 eine Trägerstruktur 17 angeordnet, die ebenfalls als Schicht, vorzugsweise aus Siliziummaterial ausgebildet ist, und die im Bereich angrenzend an die Spalte 11a, 11b eine Blendenöffnung 17a aufweist. Die Dicke der Trägerstruktur 17 und der Umriss ist den Gegebenheiten angepasst. Die Dicke beträgt beispielsweise einige Millimeter, um eine makroskopische Fassung der Spalteinheit zu ermöglichen.

An der der Doppelspalteinheit 11 abgewandten Seite der Ablenkeinheit 12 ist eine Abstandsschicht 18 angeordnet, die sich nur bis zur Blendenöffnung 17a erstreckt, so dass sich die Lichtbündel hinter der Ablenkeinheit ausbreiten können. Angrenzend an die Abstandsschicht 18 ist eine weitere Trägerstruktur 19 vorgesehen, die in ihrer Form der Trägerstruktur 17 entspricht und die eine Blendenöffnung 19a zum Hindurchlassen des Lichtbündels Lb aufweist. Der Aufbau bestehend aus Trägerstruktur 17, Doppelspalteinheit 11, Ablenkeinheit 12, Abstandsschicht 18 und Trägerstruktur 19 ist, wie aus Fig. 2a ersichtlich ist, an dem der schrägen Fläche 12a zugewandten Ende mit einem zu den Schichten senkrecht verlaufenden Träger 20 verbunden, der im Bereich der Doppelspalteinheit 11 und der Ablenkeinheit 12 eine Blendenöffnung 20a aufweist, deren Durchmesser der Breite der Abstandsschicht 18 entspricht und die sich nach außen hin erweitert. Die Öffnung 20a dient zum Hindurchlassen des an der schrägen Fläche 12a abgelenkten Lichtbündels La. Der Träger 20 ist ebenfalls aus Silizium gebildet.

Die dem Frontteleskop zugewandte Seite der Doppelspalteinheit 11 kann mit einer hochreflektierenden Beschichtung, beispielsweise Silber mit Siliziumdioxid als Schutzschicht versehen sein. Die der Ablenkeinheit 12 zugewandte Seite der Doppelspalteinheit 11 kann absorbierend ausgebildet sein. Beispielsweise kann eine Absorptionsschicht aus Ag-black oder Si-black vorgesehen sein.

Die Doppelspalteinheit 11 und die Ablenkeinheit 12 sind vorzugsweise durch Bonding, wie z.B. Si-Si Bonding, kovalentes Bonding etc., miteinander verbunden. Hierzu können sie entsprechende lithographische Referenzierungsmarken aufweisen. Auch die Blenden und die Abstandsschicht sowie der Träger sind mit der Doppelspalteinheit und der Ablenkeinheit über Bonding verbunden. Die Spalte und Spiegelflächen sind über die in der Halbleitertechnologie bekannten Ätzverfahren herstellbar. Die Spiegelflächen können durch klassische optische Polierverfahren hergestellt werden. Die Blenden werden mit Hochgeschwindigkeitsfräs- und - schneidverfahren hergestellt. Dadurch, dass alle Bestandteile aus demselben Material bestehen, hat der gesamte Aufbau eine hohe thermomechanische Stabilität.

Im Betrieb schneidet die Doppelspalteinheit 11, wie in Fig. 1 ersichtlich ist, auf dem durch das Frontteleskop 1 in der Ebene der Doppelspalteinheit 11 erzeugten Bild zwei nebeneinanderliegende Teilbilder aus, die durch die Lichtbündel La und Lb dargestellt werden. Die Fortbewegungsrichtung des Frontteleskops ist quer zum Spalt, so dass die Lichtbündel La und Lb einen örtlichen Bereich mit einer Ausdehnung quer zur Fortbewegungsrichtung repräsentieren. Das Lichtbündel La tritt durch den Spalt 11a hindurch und wird von der Ablenkeinheit 12 an der schrägen Fläche 12a unter dem Winkel α reflektiert, so dass es durch die Öffnung 20a im Träger austritt und von dort auf das Spiegelsystem 14a abgelenkt wird. Anschließend wird es durch die Disperseranordnung 15a in seine spektralen Anteile zerlegt und vom Detektor 16a in dem ersten Wellenlängenbereich, in dem dieser Detektor empfindlich ist, erfasst. Das von dem Detektor 16a erzeugte Bild ist zweidimensional und beinhaltet in der Zeilenrichtung eine Abbildung des ersten örtlichen Bereichs, der durch das Bündel 11a repräsentiert wird und in der Spaltenrichtung dessen spektrale Zerlegung.

Das durch den Spalt 11b hindurchtretende Lichtbündel Lb, welches den zweiten örtlichen Bereich in Bewegungsrichtung des Frontteleskops darstellt, geht an der schrägen Fläche 12a ungestört vorbei, tritt durch die Blendenöffnung 19a der Blende 19 hindurch, wo es dann über ein Spiegelsystem 14b abgelenkt wird und auf die Disperseranordnung 15b trifft, die das Lichtbündel Lb spektral zerlegt. Mit dem Detektor 16b, der wie der Detektor 16a ausgebildet ist, jedoch in einem zweiten Wellenlängenbereich empfindlich ist, wird ein zweidimensionales Bild des zweiten örtlichen Bereichs ähnlich dem zweidimensionalen Bild des ersten örtlichen Bereichs, nur in dem zweiten spektralen Bereich, erzeugt. Nachdem sich das Frontteleskop 1 zusammen mit dem Satelliten 8 in Bewegungsrichtung bewegt, werden somit nacheinander alle örtlichen Bereiche überstrichen, so dass man ein vollständiges spektrales Bild eines Bereiches durch Zusammensetzen der im zeitlichen Versatz aufgenommenen Bilder erhält.

Der Aufbau der Vorrichtung ermöglicht es, den Abstand der Spalte derart zu reduzieren, dass die örtlichen Bereiche sehr nahe beieinander liegen, so dass der zeitliche Versatz, in dem sie überstrichen werden, minimiert wird. Damit wird die örtliche Ko-Registrierung der erzeugten Bilder erhöht, da eine eventuelle Instabilität in der Ausrichtung des Satelliten einen geringeren Einfluss hat.

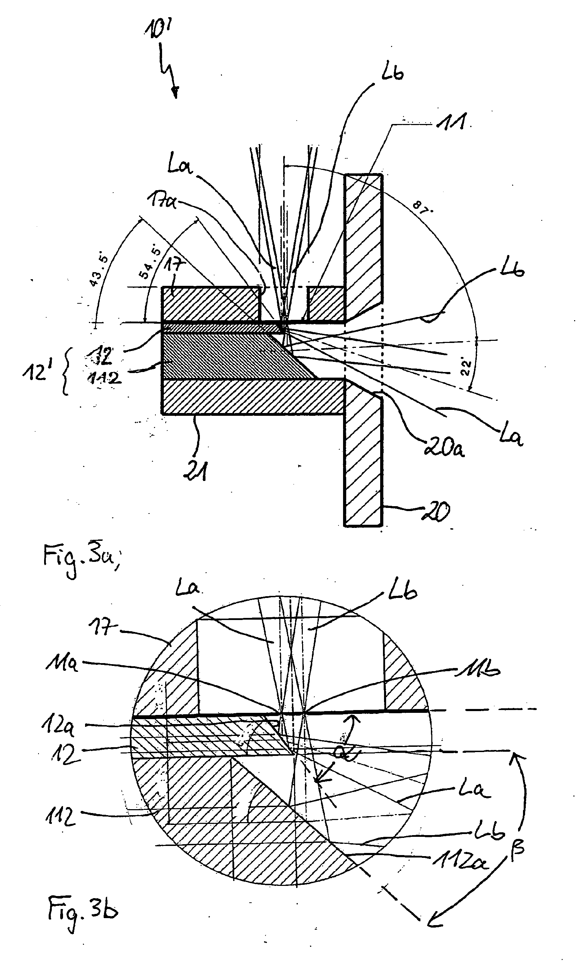

Fig. 3a und 3b zeigen eine zweite Ausführungsform der Vorrichtung zur Trennung der Lichtbündel. Teile, die gleich sind zu denen der ersten Ausführungsform gemäß Fig. 2a und Fig. 2b sind mit denselben Bezugszeichen versehen, und ihre Beschreibung wird nicht wiederholt. Im Unterschied zur ersten Ausführungsform weist die Vorrichtung 10' zur Trennung der Lichtbündel eine modifizierte Ablenkeinheit 12' aus. Die modifizierte Ablenkeinheit 12' weist eine erste Ablenkeinheit 12 auf, die wie bei der ersten Ausführungsform ausgebildet ist und die eine schräge Fläche 12a zum Ablenken des durch den Spalt 11a hindurchtretenden Lichtbündels La aufweist und eine zweite Ablenkeinheit 112, die das durch den Spalt 11b hindurchtretende Lichtbündel Lb ablenkt. Die zweite Ablenkeinheit 112 ist ebenfalls aus Siliziummaterial ausgebildet und ist an der der Spaltebene abgewandten Seite der ersten Ablenkeinheit 12 vorgesehen. Die zweite Ablenkeinheit 112 weist eine schräge Fläche 112a auf, die mit der Ebene, in der sich die Spalte befinden, einen spitzen Winkel β einschließt. Dieser wird ebenfalls entsprechend den geometrischen Gegebenheiten gewählt. Die schräge Fläche 112a der zweiten Ablenkeinheit ist so angeordnet und die Dicke der zweiten Ablenkeinheit ist so gewählt, dass das durch den zweiten Spalt 11b hindurchtretende Lichtbündel Lb unter dem Winkel β zum Lot auf die schräge Fläche 112a auftritt und an dieser unter diesem Winkel reflektiert wird, so dass das reflektierte Lichtbündel Lb durch die Öffnung 20a im Träger hindurchtritt.

Anstelle der Trägerstruktur 19 ist eine durchgehende Schicht 21, die ebenfalls aus Siliziummaterial gebildet ist, vorgesehen. Diese weist keine Öffnung auf. Die Ablenkeinheit 12', die aus den Einheiten 12 und 112 besteht, ist ebenfalls durch Bonding erzeugt.

Abwandlungen der Vorrichtung sind denkbar. Die Erfindung ist beispielsweise nicht auf ein Doppelspaltsystem beschränkt, sondern es können auch mehr als zwei Spalte und entsprechend viele Spektrometer vorgesehen sein, die Bilder in mehr als zwei Wellenlängenbereichen erzeugen. Als Material für die Schichten kann jedes Material verwendet werden, welches sich mit den in der Nanotechnologie üblichen Verfahren zur Erzeugung kleinster optomechanischer Strukturen bearbeiten läßt. Die Verbindung der Schichten kann auch durch Kleben erfolgen.

Die Erfindung ist ferner nicht auf die Anwendung in der Femerkundung beschränkt. Beispielsweise kann sie auch dazu dienen, um z.B. in der Nachrichtentechnik bei der optischen Signalübertragung eine räumliche spektralselektierte Signaltrennung oder allgemeine Anwendungen der abbildenden Spektroskopie zu ermöglichen.

## Patentansprüche

1. Abbildendes Spektrometer, insbesondere für die optische Fernerkundung mit
einem Teleskop (1),
einer Vorrichtung zur Trennung weinigstens zweier jeweils einen örtlichen Bereich abbildender Lichtbündel (La, Lb) in einer Bildebene mit
einer Spalteinheit (11), die wenigstens zwei Spalte (11a, 11b) zum Hindurchlassen jeweils eines Lichtbündels (La, Lb) aufweist,
wobei die Lichtbündel nebeneinander liegende Teilbilder eines in der Bildebene vom Teleskop erzeugten Bildes darstellen
wenigstens einer hinter der Spalteinheit angeordneten Ablenkeinheit (12, 12') mit einer Ablenkfläche (12a, 112a), die so angeordnet ist, dass jeweils nur ein Lichtbündel auf sie auftrifft, zum Ablenken des auftreffenden Lichtbündels, wobei
die Spalteinheit (11) und die Ablenkeinheit (12, 12') als miteinander verbundene Schichten ausgebildet sind,
und einer Anzahl von Spektrometern (15a, 15b) zur spektralen Zerlegung der Lichtbündel (La, Lb), die der Anzahl der Spalte entspricht.

2. Abbildendes Spektrometer nach Anspruch 1, **dadurch gekennzeichnet, dass** die Schichten aus Halbleitermaterial, vorzugsweise aus Silizium, ausgebildet sind.

3. Abbildendes Spektrometer nach Anspruch 1 oder 2, **dadurch gekennzeichnet, dass** die Schichten aus demselben Material bestehen.

4. Abbildendes Spektrometer nach einem der Ansprüche 1 bis 3, **dadurch gekennzeichnet, dass** die Schichten direkt oder über Zwischenschichten miteinander verbunden sind.

5. Abbildendes Spektrometer nach einem der Ansprüche 1 bis 4, **dadurch gekennzeichnet, dass** die Schichten durch eine Halbleiterverbindungstechnik miteinander verbunden sind.

6. Abbildendes Spektrometer nach einem der Ansprüche 1 bis 5, **dadurch gekennzeichnet, dass** die Spalte und/oder die Ablenkflächen mittels Fotolithografie-Technik hergestellt sind.

7. Abbildendes Spektrometer nach einem der Ansprüche 1 bis 6, **dadurch gekennzeichnet, dass** die Ablenkfläche (12a, 112a) als eine schräge Endkante einer Schicht ausgebildet ist, die sich unter einem vorbestimmten Winkel (α, β) zur Spaltebene erstreckt.

8. Abbildendes Spektrometer nach einem der Ansprüche 1 bis 7, **dadurch gekennzeichnet, dass** die Anzahl der Ablenkflächen kleiner als die Anzahl der Spalte ist.

9. Abbildendes Spektrometer nach einem der Ansprüche 1 bis 7, **dadurch gekennzeichnet, dass** die Anzahl der Ablenkflächen gleich der Anzahl der Spalte ist.

10. Abbildendes Spektrometer nach einem der Ansprüche 1 bis 9, **dadurch gekennzeichnet, dass** weitere Schichten (17, 19, 20) mit Öffnungen (17a, 19a, 20a) als Blenden vorgesehen sind.

11. Abbildendes Spektrometer nach einem der Ansprüche 1 bis 10, wobei jedes Spektrometer einen Matrixdetektor (16a, 16b) aufweist und wobei die Matrixdetektoren in verschiedenen Wellenlängenbereichen empfindlich sind.

12. Verwendung eines abbildenden Spektrometers nach einem der Ansprüche 1 bis 11 zur spektralsensitiven Trennung von optischen Signalen.

## Claims

1. Imaging spectrometer, in particular for remote sensing with
a telescope (1),
a device for separating at least two light bundles (La, Lb), each imaging a local area, in an image plane with
a slit unit (11) comprising at least two slits (11a, 11b) each for passing through a light bundle (La, Lb), wherein the light bundles display partial images being located next to each other in the image plane of an image created by the telescope,
at least one deflection unit (12, 12') arranged behind the slit unit, having a deflection face (12a, 112a) arranged such that it is hit by only one light bundle, respectively, for deflecting the incident light bundle, wherein
the slit unit (11) and the deflection unit (12, 12') are formed as layers interconnected with each other,
and a number of spectrometers (15a, 15b) for spectral separation of the light bundles (La, Lb) corresponding to the number of slits.

2. Imaging spectrometer according to claim 1, **characterized in that** the layers are formed of a semiconductor material, preferably of silicon.

3. Imaging spectrometer according to claim 1 or 2, **characterized in that** the layers consist of the same material.

4. Imaging spectrometer according to one of claims 1 to 3, **characterized in that** the layers are connected with each other directly or via intermediate layers.

5. Imaging spectrometer according to one of claims 1 to 4, **characterized in that** the layers are connected with each other by means of a semiconductor connecting technique.

6. Imaging spectrometer according to one of claims 1 to 5, **characterized in that** the slits and/or the deflection faces are produced by using photolithography technique.

7. Imaging spectrometer according to one of claims 1 to 6, **characterized in that** the deflection face (12a, 112a) is formed as an inclined end edge of a layer, extending to the slit plane in a predetermined angle (α, β).

8. Imaging spectrometer according to one of claims 1 to 7, **characterized in that** the number of deflection faces is smaller than the number of the slits.

9. Imaging spectrometer according to one of claims 1 to 7, **characterized in that** the number of the deflection faces equals the number of slits.

10. Imaging spectrometer according to one of claims 1 to 9, **characterized in that** further layers (17, 19, 20) are provided with openings (17a, 19a, 20a) as apertures.

11. Imaging spectrometer according to one of claims 1 to 10, wherein each spectrometer comprises a matrix detector (16a, 16b) and wherein the matrix detectors are sensitive for different wavelength intervals.

12. Use of an imaging spectrometer according to one of claims 1 to 11 for spectral sensitive separation of optical signals.

## Revendications

1. Spectromètre d'imagerie, notamment pour la télédétection optique avec un télescope (1), un dispositif de séparation d'au moins deux faisceaux lumineux (La, Lb) représentant respectivement une zone locale dans un plan focal comportant une unité à fentes (11), qui présente au moins deux fentes (11a, 11b) pour le passage respectivement d'un faisceau lumineux (La, Lb), les faisceaux lumineux représentant des images partielles côte à côte d'une image générée dans le plan focal par le télescope, au moins une unité de déviation (12, 12') agencée derrière l'unité à fentes comportant une surface de déviation (12a, 112a), qui est agencée de sorte que respectivement un seul faisceau lumineux est incident sur elle, pour dévier le faisceau lumineux incident, l'unité à fentes (11) et l'unité de déviation (12, 12') étant constituées en tant que couches reliées entre elles, et un nombre de spectromètres (15a, 15b) pour la décomposition spectrale des faisceaux lumineux (La, Lb), qui correspond au nombre de fentes.

2. Spectromètre d'imagerie selon la revendication 1, **caractérisé en ce que** les couches sont constituées de matériau semi-conducteur, de préférence en silicium.

3. Spectromètre d'imagerie selon la revendication 1 ou 2, **caractérisé en ce que** les couches se composent du même matériau.

4. Spectromètre d'imagerie selon l'une des revendications 1 à 3, **caractérisé en ce que** les couches sont reliées entre elles directement ou par des couches intermédiaires.

5. Spectromètre d'imagerie selon l'une des revendications 1 à 4, **caractérisé en ce que** les couches sont reliées entre elles par une technique d'assemblage des semi-conducteurs.

6. Spectromètre d'imagerie selon l'une des revendications 1 à 5, **caractérisé en ce que** les fentes et/ou les surfaces de déviation sont fabriquées au moyen de la technique de la photolithographie.

7. Spectromètre d'imagerie selon l'une des revendications 1 à 6, **caractérisé en ce que** la surface de déviation (12a, 112a) est constituée en tant qu'arête d'extrémité inclinée d'une couche, qui s'étend selon un angle prédéterminé (α, β) par rapport au plan de séparation.

8. Spectromètre d'imagerie selon l'une des revendications 1 à 7, **caractérisé en ce que** le nombre de surfaces de déviation est inférieur au nombre de fentes.

9. Spectromètre d'imagerie selon l'une des revendications 1 à 7, **caractérisé en ce que** le nombre de surfaces de déviation est identique au nombre de fentes.

10. Spectromètre d'imagerie selon l'une des revendications 1 à 9, **caractérisé en ce que** d'autres couches (17, 19, 20) comportant des ouvertures (17a, 19a, 20a) sont prévues en tant que diaphragmes.

11. Spectromètre d'imagerie selon l'une des revendications 1 à 10, dans lequel chaque spectromètre présente un détecteur de matrices (16a, 16b) et dans lequel les détecteurs de matrices sont sensibles dans différentes plages de longueur d'onde.

12. Utilisation d'un spectromètre d'imagerie selon l'une des revendications 1 à 11 pour la séparation sensible au niveau spectral de signaux optiques.
